# FASCICULE DE BREVET EUROPEEN

(11) **EP 1 044 230 B1**
(45) Date de publication et mention de la délivrance du brevet: **10.07.2002**
(21) Numéro de dépôt: 98962527.2
(22) Date de dépôt: 21.12.1998
(51) Int. Cl.: C08F 220/04

(54) **COPOLYMERE ALCALISOLUBLE ASSOCIATIF DIOL ET SON UTILISATION COMME AGENT EPAISSISSANT POUR LE COUCHAGE PAPIER**
DIOL ASSOZIATIVE ALKALILÖSLICHE COPOLYMERE UND DEREN VERWENDUNG ALS VERDICKUNGSMITTEL FÜR DIE BESCHICHTUNG VON PAPIER
DIOL ASSOCIATIVE ALKALINE SOLUBLE COPOLYMER AND ITS USE AS THICKENING AGENT FOR PAPER COATING

(30) Priorité: 29.12.1997 FR 9716638
(43) Date de publication de la demande: 18.10.2000
(73) Titulaire: RHODIA CHIMIE, 92408 Courbevoie Cédex (FR)
(72) Inventeur: ADAM, Hervé, F-95470 Fosses (FR); CASTAING, Jean-Christophe, F-75019 Paris (FR); DOBLER, Francis, F-60180 Nogent-sur-Oise (FR); LABEAU, Marie-Pierre, F-92300 Levallois-Perret (FR)
(74) Mandataire: Dubruc, Philippe
(86) Numéro de dépôt international: FR9802803
(87) Numéro de publication internationale: WO9933890

(56) Documents cités:
- EP-A- 0 013 836
- EP-A- 0 577 526
- EP-A- 0 705 854
- WO-A-90/07529

## Description

La présente invention concerne un copolymère alcalisoluble associatif utile notamment à titre d'agent de réduction du mottling.

La présente invention se rapporte plus particulièrement à l'industrie papetière et plus précisément au domaine du couchage du papier.

Le couchage du papier consiste à réaliser un revêtement superficiel à la surface d'un matériau cellulosique en vue d'en éliminer les irrégularités superficielles et d'obtenir une surface lisse et de faible porosité. Cette porosité a un effet bénéfique sur la netteté, l'intensité et la brillance de l'impression.

L'opération de couchage est classiquement réalisée par enduction à la surface d'un support cellulosique d'une ou plusieurs couches d'une ou de différentes composition(s) de bain de couchage.

Les compositions de bain de couchage comprennent généralement des charges comme les pigments, naturels ou synthétiques. de type carbonate de calcium, kaolin, des liants naturels comme l'amidon ou synthétiques de type latex, un agent azurant optique, ainsi qu'un composé support d'azurage, au moins un agent épaississant et éventuellement des insolubilisants.

Cet agent épaississant a pour fonctions principales de contrôler la viscosité et la rétention d'eau du bain de couchage. Il contribue également à assurer une bonne maniabilité de ce bain de couchage au niveau des machines de couchage.

Compte tenu de son rôle essentiel au niveau du couchage, des études ont déjà été réalisées en vue d'en optimiser les propriétés évoquées précédemment.

il a ainsi été mis en évidence que l'emploi d'une émulsion de copolymères alcalisolubles associatifs à titre d'agent épaississant dans les bains de couchage était particulièrement avantageux en termes rhéologiques (EP 705 854). Les polymères correspondants sont composés de trois types de monomères : des monomères éthyléniquement insaturés carboxylés des monomères vinyliques non ioniques et des monomères biphiliques non ioniques éthyléniquement insaturés. Ils témoignent d'une viscosité maximale à des pH nettement plus réduits comparativement à des agents épaississants conventionnels. Ils sont généralement préparés par polymérisation en émulsion à un pH de l'ordre de 2,5 à 5 et se présentent alors sous la forme d'une dispersion aqueuse colloïdale. Avantageusement, les particules de ce type de polymères finement divisées en dispersion, se dissolvent quasiment instantanément par ajustement du pH à une valeur supérieure à 7,5.

La demande EP 013836 décrit egalement des copolymères insolibles dans l'eau utilisables dans des compositions pour peintures, cosmetiques, etc...

Toutefois, aucun des agents épaississants actuellement disponibles ne permet de résoudre le problème posé par le mottling.

Le mottling ou encore le moutonnement est un phénomène qui se manifeste lors de l'impression de la couche de surface enduite sur un support cellulosique. On observe une fluctuation au niveau de la coloration ou encore une hétérogénéité de la prise d'encre. Il est clair que ce phénomène de mottling est particulièrement indésirable en imprimerie.

La présente invention a précisément pour objet de proposer une solution à ce problème.

De manière inattendue, les inventeurs ont mis en évidence que l'emploi d'un nouveau copolymère alcalisoluble dans la composition du bain de couchage permettait de prévenir la manifestation du phénomène mottling lors de l'impression de la couche de surface enduite sur un support cellulosique, de type papier ou carton par exemple.

En conséquence, la présente invention a pour premier objet un copolymère alcalisoluble associatif caractérisé en ce que ledit copolymère comprend au moins :
(A) 15 à 60 % en poids d'au moins un monomère mono- ou di- carboxylique α, β éthyléniquement insaturé en C₃ à C₈,
(B) 15 à 80 % en poids d'au moins un monomère, α, β éthyléniquement insaturé en C₂ à C₁₂ non ionique et copolymérisable,
(C) 1 à 20 % en poids d'au moins un monomère biphilique éthyléniquement insaturé non ionique de formule générale I : 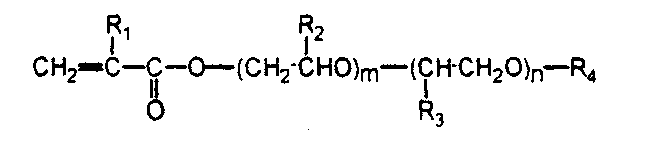 dans laquelle :
   R₁ est un atome d'hydrogène ou un groupement méthyle,
   R₂ et R₃, identiques ou différents, représentent un atome d'hydrogène ou un groupement alkyle en C₁-C₄,
   R₄ représente
      - un groupement alkyle en C₈-C₃₀,
      - un groupement phényle substitué par un à trois groupements 1-phényléthyle ou
      - un groupement phénylalkyle en C₈ à C₁₆,
   n est égal à ou compris entre 6 et 100 et m est égal à ou compris entre 0 et 50 sous réserve que n soit supérieur ou égal à m et leur somme comprise entre environ 6 et 100,
(D) 1 à 10 % en poids d'au moins un monomère éthyléniquement insaturé portant au moins deux fonctions hydroxyles vicinales ou un groupement précurseur de ces fonctions.

Avantageusement, les couches de surface obtenues à partir d'un bain de couchage incorporant à titre d'agent épaississant, au moins un copolymère tel que défini précédemment ne manifestent pas de phénomène de mottling lors de leur impression.

Ce comportement avantageux du copolymère revendiqué semble lié à la présence simultanée de monomères dits associatifs c'est-à-dire les monomères biphiliques éthyléniquement insaturés et de monomères porteurs de deux fonctions hydroxyles vicinales.

Selon un mode préféré de l'invention les copolymères revendiqués comprennent en outre au moins un monomère portant au moins deux groupements réactifs en polymérisation radicalaire. Ce type de monomères est encore appelé agent de réticulation.

De préférence, le monomère (D) porteur des fonctions hydroxyles vicinales ou d'un groupement précurseur de ces fonctions hydroxyles, dérive d'un acrylate ou méthacrylate d'alkyle. Ce monomère est de préférence un groupement alkyle en C₅ à C₂₀, porteur au moins de deux fonctions hydroxyles vicinales ou d'un groupement susceptible de générer, par hydrolyse ou tout autre traitement chimique, deux fonctions hydroxyles vicinales.

Parmi les groupements précurseurs de fonctions hydroxyles vicinales figurent par exemple les groupements acétals cycliques à cinq chaînons (du type 1,3-dioxolane et dérivés), les trialkylsilyléthers vicinaux et les groupements époxy.

A titre illustratif des monomères (D), on peut notamment citer le méthacrylate de glycidyle.

Le monomère diol, généré in situ ou non, est présent dans le copolymère final à raison de 1 à 20 % en poids et de préférence de 1 à 10 % en poids exprimé par rapport au poids total en monomères.

En ce qui concerne le monomère biphilique éthyléniquement insaturé non ionique (C) mis en oeuvre dans la présente invention, il répond de préférence à la formule générale I : 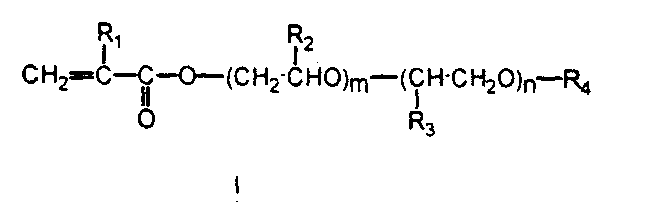 dans laquelle R₄ représente un groupement phényle substitué par au moins un et de préférence trois groupements 1-phényléthyle.

A titre de monomères biphiliques préférés, on peut plus particulièrement citer les esters acrylates ou méthacrylates de phénylpoly(alkylènoxy) substitués par un à trois groupements 1-phényléthyle au niveau du cycle phényle.

En ce qui concerne le groupement poly(alkylènoxy), il est composé de préférence de motifs éthylènoxy ou encore de motifs mixtes éthylènoxy et propylènoxy, avec le nombre de motifs alkylènoxy égal à ou compris entre 6 et 100. Les motifs éthylèneoxy conviennent plus particulièrement.

Dans le cas particulier où le groupement phényle est substitué par un, deux ou trois groupements 1-phényléthyle, le monomère qui en dérive est dit mono-, di- ou tri-stérylphénol.

A titre illustratif des monomères convenant tout particulièrement à l'invention, on mentionnera notamment ceux décrits dans la demande de brevet EP 705 854. Ces monomères peuvent être obtenus par les procédés qui sont également décrits dans cette demande EP 705 854.

La balance hydrophile lipophile (HLB) de ces monomères ayant une incidence significative sur les performances du copolymère final, on utilise de préférence des monomères possédant un nombre moyen de motifs éthylènoxy compris entre 10 et 40. Par exemple dans la formule identifiée ci-dessus m est égal à 0 et n compris entre 10 et 40.

Le monomère biphilique (C) non ionique α, β éthyléniquement insaturé tel que défini ci-dessus est de préférence mis en oeuvre dans le copolymère à raison de 1 à 20 % de préférence 1 à 12 % en poids par rapport au poids total en monomères.

Les monomères mono- ou di- carboxyliques (A) convenant plus particulièrement à la présente invention sont des monomères d'acide carboxylique α, β éthyléniquement insaturés en C₃-C₈ de formule générale II

RCH=C(R₅)-C(O)OH II

dans laquelle lorsque
(a) R est un atome d'hydrogène alors R₅ est un atome d'hydrogène ou un groupement alkyle en C₁-C₄ ou un groupement CH₂C(O)OX
(b) R est -C(O)OX alors R₅ est un atome d'hydrogène ou un groupement -CH₂C(O)OX
(c) R₅ est un atome d'hydrogène alors R est un groupement méthyle et

X est un groupement alkyle en C₁-C₄ ou un atome d'hydrogène.

Les acides acryliques ou méthacryliques ou leurs mélanges sont préférés. Toutefois, ces acides peuvent être utilisés en outre avec l'acide itaconique, fumarique, crotonique et/ou leurs hémi-esters, ainsi que d'autres acides carboxyliques éthyléniquement insaturés tel que l'acide maléique, avec des alcanols en C₁-C₄ ou ceux d'anhydrides d'acides insaturés tel que l'anhydride maléique.

De préférence, le copolymère comprend au moins 15 % en poids et plus préférentiellement de 30 à 55 % et encore plus préférentiellement de 30 à 40 % en poids de monomères acide carboxylique (A). Toutefois, les monomères d'acides carboxyliques annexes évoqués ci-dessus et leurs hémi-esters peuvent être substitués en partie aux acides monomères acide carboxylique (A) par exemple à un taux de 1 à 15 % en poids par rapport au poids total en monomères (A).

Le polymère selon l'invention contient également au moins un monomère α, β éthyléniquement insaturé en C₂ à C₁₂ non ionique et copolymérisable (B) choisi parmi les composés de formule générale III :

CH₂=CYZ III

dans laquelle :
lorsque :
   - Y est un atome d'hydrogène alors Z est un groupement COOR' C₆H₄R", CN, Cl, OC(O)alkyle en C₁-C₈, CH=CH₂, NH₂ ou NHR' ;
   - Y est CH₃ alors Z est un groupement COOR', C₆H₄R", CN, CH=CH₂, NH₂ ou NHR' ;
   - Y est un atome de chlore alors Z est une atome de chlore avec
   - R' étant un groupement alkyle en C₁-C₈ ou un groupement hydroxyalkyle en C₁-C₈ et
   - R" étant un atome d'hydrogène, de chlore, de brome ou un groupement alkyle en C₁-C₄.

Des exemples typiques de ces monomères (B) sont les esters hydroxyalkyles en C₂-C₈ ou alkyles en C₁-C₈ des acides acrylique et méthacrylique comme l'acrylate d'éthyle, le méthacrylate d'éthyle, l'acrylate de 2-éthylhexyle, l'acrylate de butyle, le méthacrylate de butyle, l'acrylate de 2-hydroxyéthyle, le méthacrylate de 2-hydroxybutyle, le styrène, le vinyltoluène. le ter-butylstyrène, l'hydroxystyrène, l'isopropylstyrène, le p-chlorostyrène, l'acétate de vinyle, le butyrate de vinyle, le caprolate de vinyle, l'acrylonitrile, le méthacrylonitrile, le butadiène, l'isoprène, le chlorure de vinyle, le chlorure de vinylidène, les (méth)acrylamides et analogues.

De préférence, le monomère (B) est un ester monovinylique tel que l'acrylate d'éthyle ou un mélange de celui-ci avec le styrène, l'acrylate de l'hydroxyéthyle, l'acrylonitrile, le chlorure de vinyle ou l'acétate de vinyle.

Ce monomère est présent à environ 15 à 80 % et de préférence à environ 35% à 70% et plus préférentiellement à environ 50 à 70 % en poids par rapport au poids total en monomères.

En ce qui concerne les monomères comprenant au moins deux groupements réactifs en polymérisation radicalaire, (E), on peut notamment citer le glyoxalbisacrylamide et le diméthacrylate d'éthylène glycol.

De préférence, ce monomère (E) est présent dans le copolymère selon l'invention à raison de 0,01 à 1 % en poids par rapport au poids total en monomères, et préférentiellement de 0,01 à 0,5 %.

Le copolymère selon l'invention peut être préparé à partir des monomères (A), (B), (C), (D) et éventuellement (E) décrits ci-dessus par polymérisation radicalaire à un pH inférieur ou de l'ordre de 5, et en présence d'au moins un initiateur de radicaux libres. Les initiateurs sont normalement présents à raison de 0,01 % à 3 % par rapport au poids total en monomères. Il peut notamment s'agir dune polymérisation radicalaire en émulsion.

La polymérisation en émulsion à un pH acide inférieur à 5 a l'avantage de conduire à une dispersion colloïdale aqueuse stable avec une teneur en solides relativement haute sans problème de viscosité.

Les initiateurs convenant tout particulièrement à l'invention sont des composés de type peroxygène en particulier hypersulfate organique tel que le persulfate d'ammonium, de potassium ou de sodium, les peroxydes tels que les peroxydes d'hydrogène ; les hydroperoxydes organiques tels que par exemple l'hydroperoxyde de cumène ou de tertiobutyle ; les peracides organiques par exemple le peroxyde de benzoyle, d'acétyle ou de lauryle, les acides peracétique et perbenzoïque de même que tout composé capable de produire des radicaux libres tels que le 2, 2'-azobisisobutyronitrile.

Le cas échéant, on peut introduire lors de la réaction un agent de transfert de chaîne et un émulsifiant annexe.

A titre illustratif de cet agent de transfert de chaîne on peut notamment citer le tétrachlorure de carbone, le bromoforme, le bromotrichlorométhane, les mercaptans à longue chaîne alkyle et les thioesters tels que les N-dodécylmercaptan, t-dodécylmercaptan, octylmercaptan, tétradécylmercaptan, hexadécylmercaptan, le thioglycolate de butyle, d'isooctyle ou de dodécyle. Cet agent de transfert de chaîne peut être mis en oeuvre à raison de 0,1 à 3 % en parties de monomères polymérisables.

On peut également associer au moins un émulsifiant anionique dans la charge de polymérisation.

Ces agents émulsifiants anioniques peuvent être notamment des alkylarylsulfonates de métaux alcalins, des alkylsulfates de métaux alcalins et des alkylesters sulfonatés. Des exemples spécifiques de ces émulsifiants conventionnels sont le dodécylbenzènesulfonate de sodium, le dibutylnaphtalènesulfonate de sodium, le laurylsulfate de sodium. le dodécyldiphénylétherdisulfonate de sodium, le n-octadécylsulfosuccinamate disodique et le dioctylsulfosuccinate de sodium De même on peut éventuellement envisager de mettre en oeuvre des agents chélatants, des agents tampons, des sels inorganiques ou des agents permettant d'ajuster le pH.

Classiquement la copolymérisation est réalisée à une température comprise environ entre 60°C et 90°C mais les températures plus élevées ou plus basses sont également appropriées. La polymérisation peut être réalisée en bain unique ou par étape de manière continue et/ou par addition continue des monomères selon des méthodes conventionnelles.

Le copolymère final obtenu selon la polymérisation à un pH acide se présente généralement sous la forme d'une dispersion colloïdale aqueuse stable contenant le copolymère dispersé sous forme de particules de tailles moyennes d'environ 500 à 5 000 10⁻¹⁰ meter et de préférence 1 000 à 3 000 10⁻¹⁰ meter.

Les émulsions de copolymères revendiquées pouvant être obtenues selon l'invention possèdent en général un poids moléculaire moyen déterminé par chromatographie par perméation de gel, variant, selon le taux d'agent de transfert, de 10 000 à plusieurs centaines de milliers de g/mole. La viscosité, mesurée par un appareillage standard (Brockfield RVT 0,5 t) est de 30 à plusieurs millions de mPa.s et de préférence 5 000 à plusieurs millions de mPa.s estimées sur une solution aqueuse à 4 % dans un sel d'ammonium à pH 9 et température de 25 °C, à 0,5 tr/mn.

Ces émulsions aqueuses de copolymères contiennent environ 10 à 50 % en poids de copolymères et ont une viscosité relativement basse. Elle peuvent donc être efficacement mélangées avec des systèmes aqueux.

Il est clair que la présente invention s'étend également aux polymères revendiqués obtenus par d'autres techniques de polymérisation radicalaires et notamment celles se déroulant en solution.

Les copolymères selon l'invention sont particulièrement utiles à titre d'agents épaississants dans l'industrie du couchage de papier et plus particulièrement à titre d'agent anti-mottling.

De préférence, le copolymère revendiqué est introduit dans une composition de bain de couchage à raison de 0,1 à 3 parties en poids exprimés pour 100 parties de charges.

Il y est mélangé aux autres composants classiquement mis en oeuvre dans ce type de composition. Ces composants sont des charges de types pigments. Il s'agit de pigments minéraux comme le kaolin, le blanc satin, le carbonate de calcium, le talc, l'oxyde de titane ou des pigments dits plastiques.

Le bain de couchage comprend également des liants de type latex, à raison de 8 à 15 parties en poids sec pour 100 parties de pigments.

Un agent azurant optique à raison de 0,1 à 0,7 parties en poids et un support d'azurant comme l'alcool polyvinylique à raison de 0,2 à 1 parties en poids sont également présents dans les bains de couchage conventionnels.

Bien entendu, cette composition de bain de couchage peut comprendre d'autres agents annexes de type agent glissant comme le stéarate de calcium, et/ou agent insolubilisant.

Généralement, la composition de bain de couchage comprend 60 à 75 % en poids d'extrait sec et possède un pH compris entre 8 et 10.

Les couches sont enduites à la surface d'un support cellulosique selon des techniques d'enduction conventionnelles.

De manière avantageuse, la présence d'un copolymère selon l'invention dans un bain de couchage, et plus particulièrement dans le bain de couchage destiné à constituer la couche de surface à savoir externe du support cellulosique, permet de s'affranchir du phénomène de mottling classiquement observé. Le copolymère contribue à l'optimisation de l'immobilisation de la couche papetière et donc permet de s'opposer efficacement aux migrations survenant généralement lors du séchage de la couche papetière, apposée à la surface de la couche superficielle.

La présente invention a également pour objet l'utilisation d'un copolymère selon l'invention ou susceptible d'être obtenu selon le procédé revendiqué à titre d'agent épaississant des bains de couchage pour enduction sur des supports cellulosiques. Elle vise également l'utilisation d'un copolymère selon l'invention ou susceptible d'être obtenu selon le procédé revendiqué à titre d'agent de réduction du mottling dans les bains de couchage pour enduction sur des supports cellulosiques.

A cet effet, le polymère est mis en oeuvre dans un bain de couchage pour application papetière à raison 0,1 à 3 parties en poids, pour 100 parties de charge.

Les copolymères revendiqués se révèlent plus performants que les liants actuellement mis en oeuvre par les papetiers, comme la carboxyméthylcellulose, pour minimiser le phénomène de mottling.

Ce comportement avantageux est en particulier caractérisé dans l'exemple 2 soumis ci-après, comparativement à des agents épaississants classiques.

Par ailleurs, on note que l'augmentation de la teneur en monomères à diols vicinaux dans l'émulsion conforme à l'invention privilégie son activité anti-mottling.

Les exemples figurant ci-après sont soumis à titre illustratif.

### EXEMPLE 1 : Synthèse d'une émuision aqueuse de copolymères selon l'invention.

Trois émulsions aqueuses à base respectivement de copolymères selon l'invention et de copolymères témoins sont préparées par polymérisation en émulsion des monomères suivants :

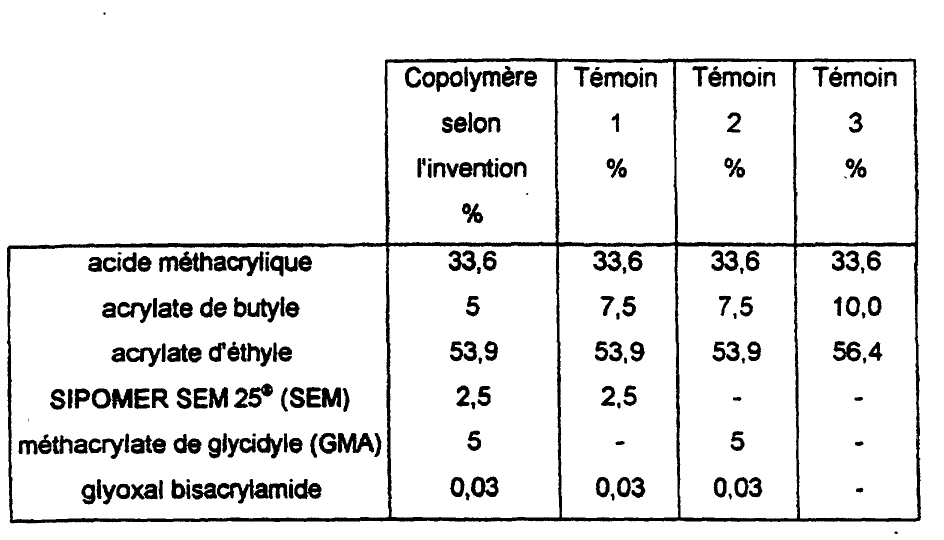

Le SIPOMER SEM 25® est un produit commercialisé par la société GERONAZZO. Il s'agit du méthacrylate de l'éthoxylat de tristyrylphénol à 25 motifs d'oxyde d'éthylène.

Le méthacrylate de glycidyle génère des fonctions hydroxyles vicinales par hydrolyse dans les conditions de synthèse (milieu aqueux fortement acide), de stockage ou de préparation du bain de couchage (milieu basique).

La polymérisation est mise en oeuvre en utilisant, outre les monomères identifiés précédemment, un tensioactif à savoir un sel d'ammonium de polyéthoxylat nonylphénol (ABEX EP 110®), du peroxodisulfate d'ammonium à titre d'amorceur et le dimère de l'alphaméthylstyrène ou le t-dodécylmercaptan à titre d'agent de transfert.

Ces agents sont mis en oeuvre à raison de 1,5 % pour l'ABEX EP-110®, 0,25 % pour le peroxodisulfate d'ammonium et 0,05 % pour le dimère de l'α-méthylstyrène ou 0,1 % pour le dodécylmercaptan.

La polymérisation en émulsion est réalisée selon le protocole suivant:
On introduit 201,6 g d'acide méthacrylique, 323,4 g d'acrylate d'éthyle, 30,0 g d'acrylate de butyle, 0,06 g de glyoxalbisacrylamide et 0,30 g de dimère de l'alphaméthylstyrène avec le cas échéant 15,0 g de Sipomer SEM-25® et éventuellement 5,0 g de méthacrylate de glycidyle, dans 330 g d'eau déionisée contenant 9,0 g d'ABEX EP-110® (nonylphénol éthoxylé sulfaté).
47,35 g de l'émulsion ainsi préparée sont introduits dans un réacteur en verre de 2 litres thermostaté, muni d'un agitateur et connecté à trois pompes. contenant 67,0 g d'eau déionisée et 0,1 g de pyrophosphate de sodium. La température du réacteur est ensuite portée à 78-82 °C. Après une attente de 10 mn, le reste de l'émulsion (899,65 g) est introduit en continu dans le réacteur maintenu à 78-82 °C, durant 5 heures (pompe 1). Simultanément sont ajoutés du persulfate d'ammonium dissout dans de l'eau déionisée (respectivement 0,6 g et 53 g ; pompe 2) et du glyoxalbisacrylamide dissout dans de l'eau déionisée (respectivement 0,12 g et 18 g ; pompe 3). La température du réacteur est ensuite maintenue 2 heures à 78-82 °C puis ramenée à 20-25 °C.

Les polymères ainsi obtenus sont testés pour leur effet réducteur du mottling dans l'exemple 2.

### EXEMPLE 2 : Utilisation des émulsions aqueuses obtenues en exemple 1 dans un bain de couchage.

Dans cet essai, chacune des émulsions préparées en exemple 1 est comparée à de la carboxyméthylcellulose (Finnfix FF150 (CMC1) et Finnfix FF30 (CMC2) commercialisés par METSASERLA) qui est l'épaississant standard mis en oeuvre par les papetiers pour minimiser le phénomène de mottling.
- Les compositions agents testées ci-après sont :
   - deux carboxyméthylcelluloses notées CMC1 et CMC2.
   - deux copolymères selon l'invention (préparés selon le protocole de l'exemple 1 et issus de deux synthèse différentes), notés copolymère 1 et copolymère 2,
   - trois compositions témoins notées témoin 1, 2 et 3.
- Deux supports sont testés :
   - du papier sans bois non précouché (80 g/m²),
   - du papier sans bois précouché (105 g/m²).

La formule de bain de couchage utilisée est une formule typique de couche supérieure de papier sans bois à 67 % en poids d'extrait sec et comprenant :

| | parties |
|---|---|
| • carbonate de calcium | 75 |
| • kaolin | 25 |
| • latex liant | 11 |
| • APV (Rhodoviol 4/20) | 0,7 |
| • co-liant | variable |
| • azurant optique | 0,5 |
| • insolubilisant | 0-0,5 |
| • stéarate de calcium | 0,5 |
| Le pH est ajusté à 9. | |

Le bain est déposé sur le papier sur une machine à lame de laboratoire de marque EUCLID TOOL®.

La quantité de bain déposée correspond à un poids de couche sec de 10 g/m².

Pour avoir des conditions de couchage représentatives, particulièrement pour ce qui concerne le séchage qui est connu pour exacerber le mottling, un séchage instantané de la couche directement après la dépose est réalisé. A cet effet, un décapeur thermique souffle un flux d'air chaud à T = 150 °C sur le papier immédiatement à la sortie de la lame.

Le mottling est jugé par l'impression des papiers couchés obtenus dans les conditions décrites plus haut.

Les impressions sont réalisées sur un appareil de laboratoire Prüfbau® standard pour l'évaluation des papiers. Les conditions d'impression sont des conditions standards reconnues par les hommes de l'art pour juger de l'hétérogénéité du rendu d'impression ou mottling Une bande de papier est imprimée avec une molette métallique couverte d'un film d'encre. Après un temps de 3 secondes pendant lequel le papier fixe une certaine quantité d'encre, l'encre non fixée est éliminée par contre-impressions. Pour se faire, la surface imprimée est essuyée avec une molette métallique revêtue d'un revêtement caoutchouc.

Cette opération d'essuyage est répétée 3 fois de manière à bien éliminer l'encre non fixée. L'impression et les contre-impressions sont réalisées à une vitesse de 1 m/s sous une pression de 200 kN/cm.

L'homogénéité de la coloration d'impression renseigne alors sur la fixation de l'encre. Idéalement, une homogénéité totale est parfaite. Plus hétérogène est la coloration d'impression et donc la fixation de l'encre, moins bonne est la qualité de l'impression. Cette hétérogénéité de l'impression est provoquée par le papier couché. Dans ces conditions, le papier sera jugé mauvais au regard du critère de mottling.

L'évaluation du mottling est faite selon les pratiques de la profession. Elle relève d'un jugement visuel de l'homogénéité de la coloration d'impression par un panel de 8 personnes. Chaque personne note l'homogénéité de coloration d'impression sur une échelle de 1 à 5, où 1 correspond à une impression homogène, et 5 à une coloration d'impression fortement hétérogène. La valeur moyenne est ensuite calculée.

Les formulations des compositions testées et les résultats obtenus sont présentés en tableaux I, II et III ci-après.

On note que les couches de surfaces obtenues par mise en oeuvre des témoins 1-3, présentent un mottling comparable ou supérieur à celui observé avec la carboxyméthylcellulose.

Toutefois, seules les couches obtenues à l'aide d'une émulsion mettant en oeuvre un copolymère conforme à la présente invention manifestent un phénomène de mottling significativement réduit comparativement à la carboxyméthylcellulose. Qui plus est, la différence s'accroît lorsque le taux en émulsion aqueuse, (exprimée pour 100 g de charges) selon l'invention dans le bain de couchage augmente de 0,4 à 1 partie en poids.

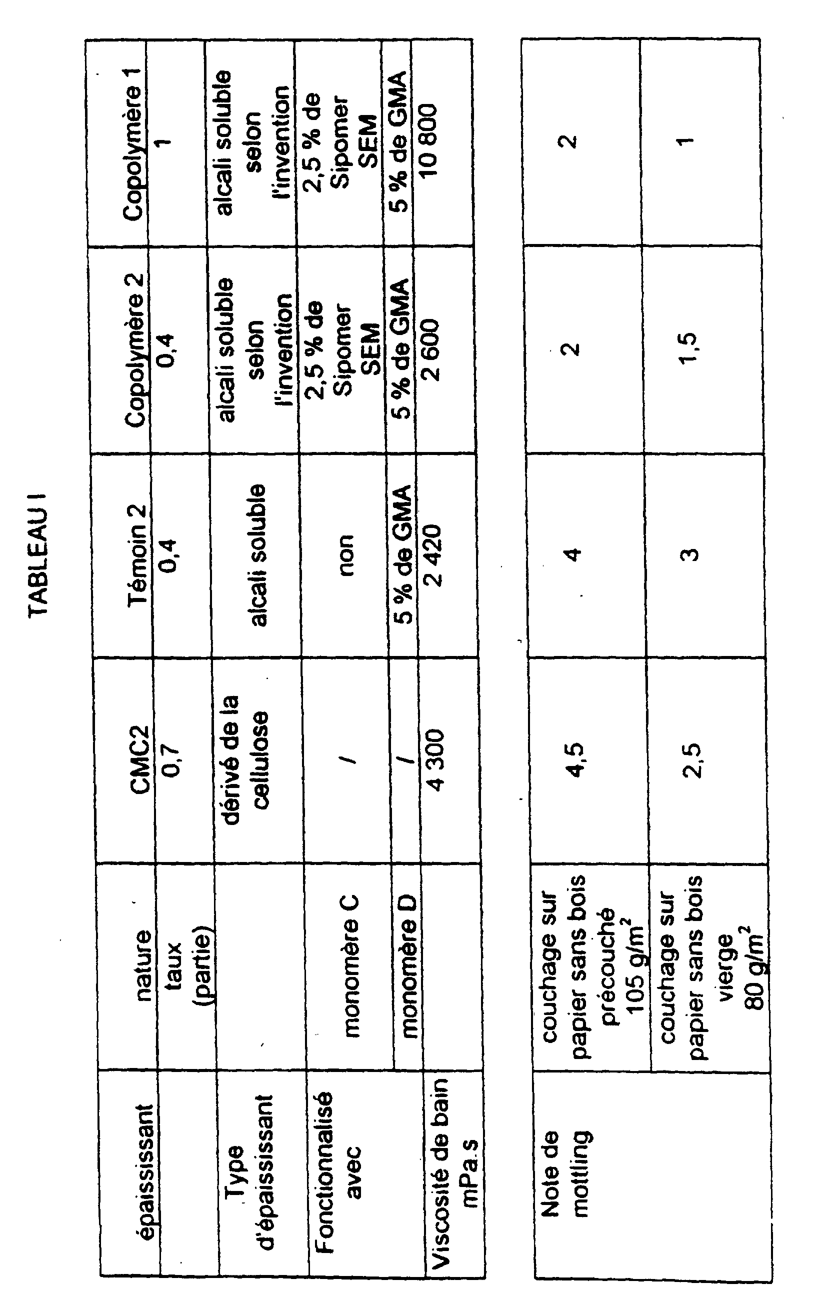

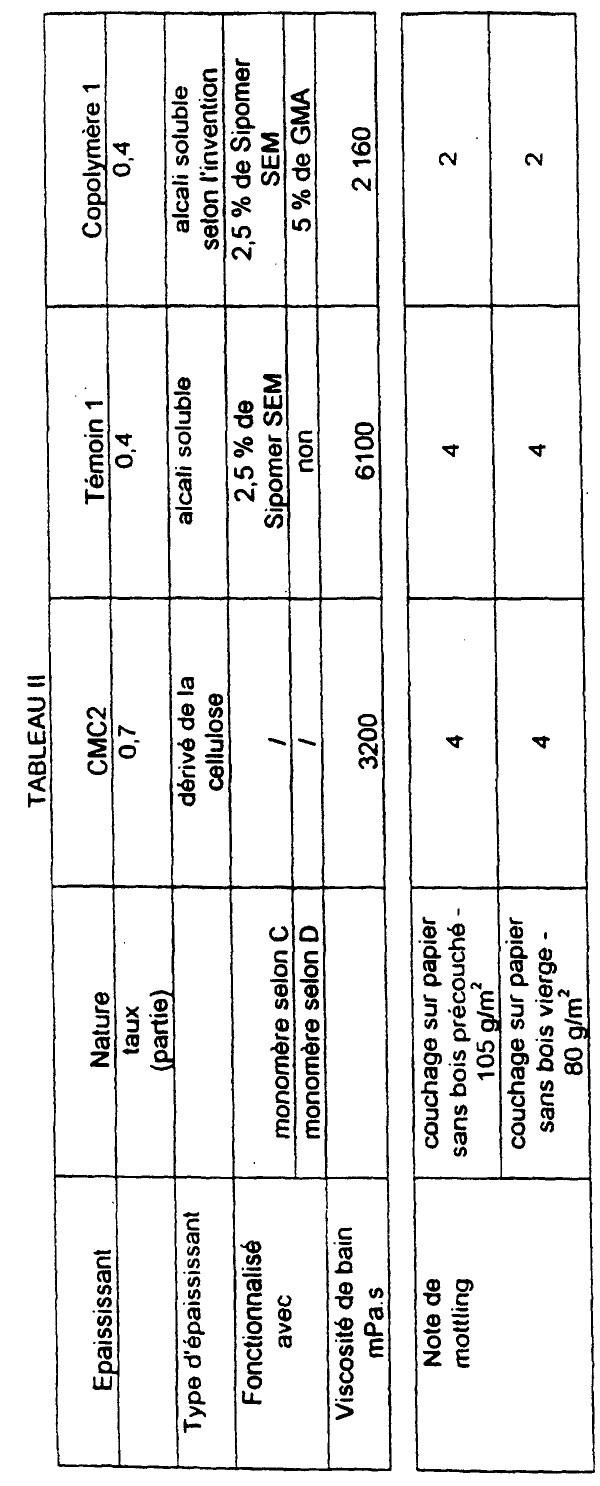

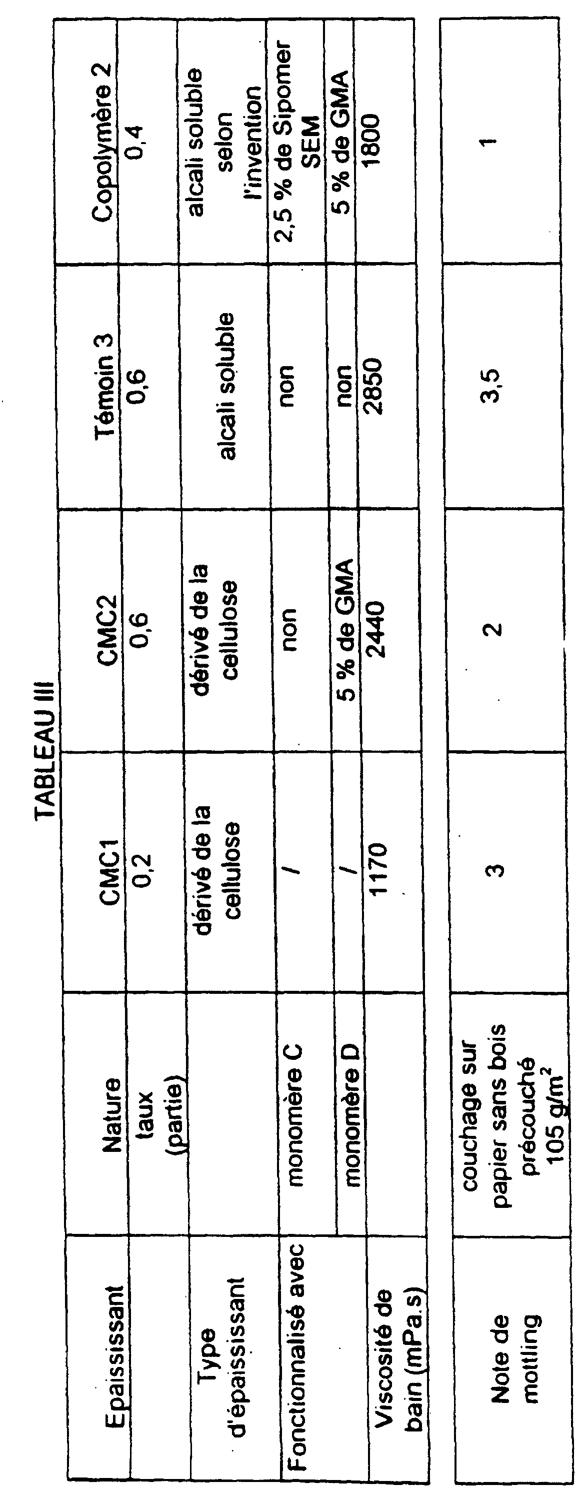

## Revendications

1. Copolymère alcalisoluble associatif **caractérisé en ce que** ledit copolymère comprend au moins :
(A) 15 à 60 % en poids d'au moins un monomère mono- ou dicarboxylique α, β éthyléniquement insaturé en C₃ à C₈,
(B) 15 à 80 % en poids d'au moins un monomère α, β éthyléniquement insaturé en C₂ à C₁₂ non ionique et copolymérisable,
(C) 1 à 20 % en poids d'au moins un monomère biphilique éthyléniquement insaturé non ionique de formule générale I : 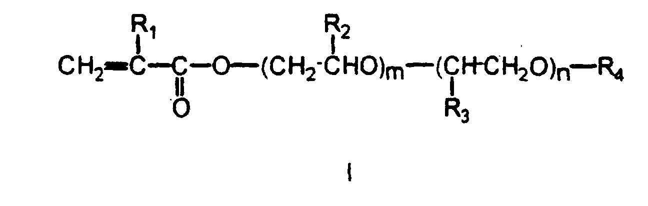 dans laquelle :
R₁ est un atome d'hydrogène ou un groupement méthyle.
R₂ et R₃, identiques ou différents, représentent un atome d'hydrogène ou un groupement alkyle en C₁-C₄,
R₄ représente :
- un groupement alkyle en C₈-C₃₀,
- un groupement phényle substitué par un à trois groupements 1-phényléthyle ou
- un groupement phénylalkyle en C₈ à C₁₆.
n est égal à ou compris entre 6 et 100 et m est égal à ou compris entre 0 et 50 sous réserve que n soit supérieur ou égal à m et leur somme comprise entre 6 et 100,
(D) 1 à 10 % en poids d'au moins un monomère éthyléniquement insaturé portant au moins deux fonctions hydroxyles vicinales ou un groupement précurseur de ces fonctions.

2. Copolymère alcalisoluble associatif selon la revendication 1 **caractérisé en ce que** le copolymère comprend en outre au moins un monomère portant au moins deux groupements réactifs en polymérisation radicalaire.

3. Copolymère alcalisoluble associatif selon la revendication 1 ou 2 **caractérisée en ce que** le monomère (D) dérive d'un acrylate ou méthacrylate d'alkyle.

4. Copolymère alcalisoluble associatif selon la revendication 1, 2 ou 3 **caractérisé en ce que** le groupement précurseur des fonctions hydroxyles présent dans le monomère (D) est un groupement acétal cyclique à cinq chaînons, trialkylsilyléther vicinal ou époxy.

5. Copolymère alcalisoluble associatif selon l'une des revendications 1 à 4 **caractérisé en ce que** le monomère (D) est le méthacrylate de glycidyle.

6. Copolymère alcalisoluble associatif selon l'une des revendications 1 à 5 **caractérisé en ce que** le monomère biphilique (C) répond à la formule générale I: 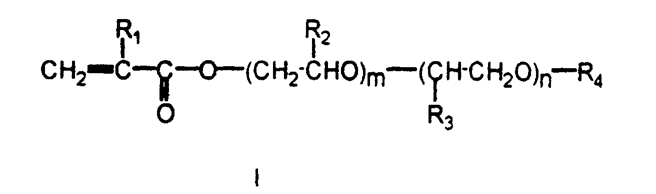 dans laquelle R₄ représente un groupement phényle substitué par au moins un groupements 1-phényléthyle.

7. Copolymère alcalisoluble associatif selon l'une des revendications 1 à 6 **caractérisé en ce que** le monomère biphilique est un ester acrylate ou méthacrylate de phényl-poly(alkylènoxy) substitué par un à trois groupements 1-phényléthyle au niveau du cycle phényle.

8. Copolymère alcalisoluble associatif selon la revendication 7 **caractérisé en ce que** le groupement poly(alkylènoxy) possède des motifs éthylènoxy ou des motifs mixtes éthylènoxy et propylènoxy avec le nombre de motifs alkylènoxy égal à ou compris entre 6 et 100.

9. Copolymère alcalisoluble associatif selon l'une des revendications 1 à 8 **caractérisé en ce que** le monomère (A) répond à la formule générale II :
RCH=C(R₅)-C(O)OH II
dans laquelle lorsque
(a) R est un atome d'hydrogène alors R₅ est un atome d'hydrogène ou un groupement alkyle en C₁-C₄ ou un groupement CH₂C(O)OX
(b) R est -C(O)OX alors R₅ est un atome d'hydrogène ou un groupement -CH₂C(O)OX
(c) R₅ est un atome d'hydrogène alors R est un groupement méthyle et
X est un groupement alkyle en C₁-C₄ ou un atome d'hydrogène.

10. Copolymère alcalisoluble associatif selon l'une quelconque des revendications 1 à 9 **caractérisée en ce que** le monomère (A) est l'acide méthacrylique ou acrylique ou un de leurs mélanges avec en outre éventuellement l'acide itaconique, fumarique, crotonique et/ou leurs hémi-esters avec des alcanols en C₁-C₄ ou ceux d'anhydrides d'acides insaturés tel que l'anhydride maléique.

11. Copolymère alcalisoluble associatif selon l'une quelconque des revendications 1 à 10 **caractérisée en ce que** le monomère (B) répond à la formule générale III :
CH₂=CYZ III
dans laquelle :
lorsque:
- Y est un atome d'hydrogène alors Z est un groupement COOR', C₆H₄R", CN, Cl, OC(O)alkyle en C₁-C₈, CH=CH₂, NH₂ ou NHR';
- Y est CH₃ alors Z est un groupement COOR', C₆H₄R", CN, CH=CH₂, NH₂ ou NHR' ;
- Y est un atome de chlore alors Z est un atome de chlore avec
- R' étant un groupement alkyle en C₁-C₈ ou un groupement hydroxyalkyle en C₁-C₈ et
- R" étant un atome d'hydrogène, de chlore, de brome ou un groupement alkyle en C₁-C₄.

12. Copolymère alcalisoluble associatif selon l'une des revendications 1 à 11 **caractérisé en ce que** le monomère (B) est un monomère choisi parmi : l'acrylate d'éthyle, le méthacrylate d'éthyle, l'acrylate de 2-éthylhexyle, l'acrylate de butyle, le méthacrylate de butyle, l'acrylate de 2-hydroxyéthyle, le méthacrylate de 2-hydroxybutyle, le styrène, le vinyltoluène, le ter-butylstyrène, l'hydroxystyrène, l'isopropylstyrène, le p-chlorostyrène l'acétate de vinyle, le butyrate de vinyle, le caprolate de vinyle ; l'acrylonitrile, le méthacrylonitrile, le butadiène, l'isoprène, le chlorure de vinyle, le chlorure de vinylidène, les (méth)acrylamides et analogues.

13. Copolymère alcalisoluble associatif selon l'une des revendications 1 à 12, **caractérisé en ce que** le monomère (B) est un ester monovinylique tel que l'acrylate d'éthyle ou un mélange de celui-ci avec le styrène, l'acrylate de l'hydroxyéthyle, l'acrylonitrile, le chlorure de vinyle ou l'acétate de vinyle.

14. Copolymère alcalisoluble associatif selon l'une des revendications 2 à 13 **caractérisé en ce que** le monomère portant au moins 2 groupements réactifs en polymérisation radicalaire (E) est choisi parmi le glyoxalbisacrylamide et le diméthacrylate d'éthylène glycol.

15. Copolymère alcalisoluble associatif selon la revendication 14 **caractérisé en ce qu'**il comprend 0,01 à 1 % en poids dudit monomère.

16. Procédé pour préparer un copolymère alcali soluble associatif selon l'une des revendications 1 à 15 **caractérisé en ce que** l'on réalise la polymérisation radicalaire des monomères (A), (B), (C), (D) et éventuellement (E), à un pH inférieur ou de l'ordre de 5, et en présence d'au moins un initiateur de radicaux libres.

17. Procédé selon la revendication 16 **caractérisé en ce que** le copolymère alcalisoluble associatif est obtenu par polymérisation radicalaire en émulsion.

18. Utilisation d'un copolymère selon l'une des revendications 1 à 15 ou susceptible d'être obtenu par le procédé selon la revendication 16 ou 17 à titre d'agent épaississant des bains de couchage pour enduction sur des supports cellulosiques.

19. Utilisation d'un copolymère selon l'une des revendications 1 à 15 ou susceptible d'être obtenu par le procédé selon la revendication 16 ou 17 à titre d'agent de réduction du mottling dans les bains de couchage pour enduction sur des supports cellulosiques.

20. Utilisation selon la revendication 18 ou 19 **caractérisée en ce que** le copolymère est mis en oeuvre dans un bain de couchage pour application papetière à raison de 0,1 à 3 parties en poids, pour 100 parties de charge.

## Patentansprüche

1. Assoziatives alkalilösliches Copolymer, **dadurch gekennzeichnet, dass** das Copolymer wenigstens umfasst:
(A) 15 bis 60 Gew.-% wenigstens eines mono- oder dicarboxylischen α, β-ethylenisch ungesättigten Monomers mit C₃ bis C₈,
(B) 15 bis 80 Gew.-% wenigstens eines nichtionischen und copolymerisierbaren α, β-ethylenisch ungesättigten Monomers mit C₂ bis C₁₂,
(C) 1 bis 20 Gew.-% wenigstens eines nichtionischen ethylenisch ungesättigten biphilen Monomers der allgemeinen Formel I: 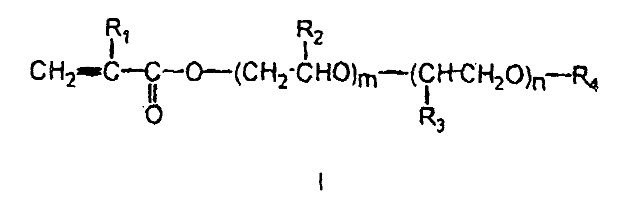 in welcher:
R₁ ein Wasserstoffatom oder eine Methylgruppe ist,
R₂ und R₃, die gleich oder verschieden sein können, für ein Wasserstoffatom oder eine C₁-C₄-Alkylgruppe stehen,
R₄ steht für:
- eine C₈-C₃₀-Alkylgruppe,
- eine Phenylgruppe, welche mit ein bis drei 1-Phenylethylgruppen substituiert ist oder
- eine C₈-C₁₆-Phenylalkylgruppe,
n zwischen 6 und 100, einschließlich der Grenzwerte, liegt und m zwischen 0 und 50, einschließlich der Grenzwerte, liegt, unter der Voraussetzung, dass n größer oder gleich m ist und deren Summe zwischen 6 und 100 liegt,
(D) 1 bis 10 Gew.-% wenigstens eines ethylenisch ungesättigten Momomers, das wenigstens zwei vicinale Hydroxylfunktionen oder eine Vorläufergruppe dieser Funktionen trägt.

2. Assoziatives alkalilösliches Copolymer nach Anspruch 1, **dadurch gekennzeichnet, dass** das Copolymer unter anderem wenigstens ein Monomer umfasst, das wenigstens zwei im Hinblick auf eine radikalische Polymerisation reaktive Gruppen trägt.

3. Assoziatives alkalilösliches Copolymer nach Anspruch 1 oder 2, **dadurch gekennzeichnet, dass** das Monomer (D) von einem Alkylacrylat oder -methacrylat abgeleitet ist.

4. Assoziatives alkalilösliches Copolymer nach Anspruch 1, 2 oder 3, **dadurch gekennzeichnet, dass** die Vorläufergruppe der Hydroxylfunktionen, welche in dem Monomer (D) vorliegen, eine cyclische Acetalgruppe mit 5 Gliedern, ein vicinaler Trialkylsilylether oder Epoxy ist.

5. Assoziatives alkalilösliches Copolymer nach einem der Ansprüche 1 bis 4, **dadurch gekennzeichnet, dass** das Monomer (D) Glycidylmethacrylat ist.

6. Assoziatives alkalilösliches Copolymer nach einem der Ansprüche 1 bis 5, **dadurch gekennzeichnet, dass** das biphile Monomer (C) der allgemeinen Formel I: 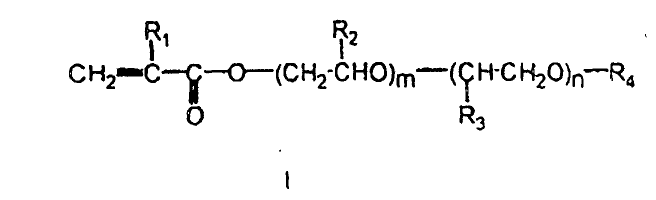 entspricht, in welcher R₄ für eine Phenylgruppe steht, die mit wenigstens einer 1-Phenylethylgruppe substituiert ist.

7. Assoziatives alkalilösliches Copolymer nach einem der Ansprüche 1 bis 6, **dadurch gekennzeichnet, dass** das biphile Monomer ein Acrylat- oder Methacrylatester von Poly(alkylenoxy)phenol ist, das auf der Ebene des Phenylrings mit ein bis drei 1-Phenylethylgruppen substituiert ist.

8. Assoziatives alkalilösliches Copolymer nach Anspruch 7, **dadurch gekennzeichnet, dass** die Poly(alkylenoxy)gruppe Ethylenoxymotive oder gemischte Ethylenoxy- und Propylenoxymotive besitzt, wobei die Anzahl der Alkylenoxymotive zwischen 6 und 100, einschließlich der Grenzwerte, liegt.

9. Assoziatives alkalilösliches Copolymer nach einem der Ansprüche 1 bis 8, **dadurch gekennzeichnet, dass** das Monomer (A) der allgemeinen Formel II:
RCH=C(R₅)-C(O)OH II
entspricht, in welcher, wenn
(a) R ein Wasserstoffatom ist, dann R₅ ein Wasserstoffatom oder eine C₁-C₄-Alkylgruppe oder eine Gruppe -CH₂C(O)OX ist,
(b) R -C(O)OX ist, dann R₅ ein Wasserstoffatom oder eine Gruppe -CH₂C(O)OX ist
(c) R₅ ein Wasserstoffatom ist, dann R eine Methylgruppe ist und
X eine C₁-C₄-Alkylgruppe oder ein Wasserstoffatom ist.

10. Assoziatives alkalilösliches Copolymer nach irgendeinem der Ansprüche 1 bis 9, **dadurch gekennzeichnet, dass** das Monomer (A) Methacryl- oder Acrylsäure oder eine ihrer Mischungen mit zusätzlich gegebenenfalls Itacon-, Fumar-, Crotonsäure und/oder deren Hemiestern mit C₁-C₄-Alkanolen oder denjenigen von ungesättigten Säureanhydriden wie z. B. Maleinsäureanhydrid ist.

11. Assoziatives alkalilösliches Copolymer nach irgendeinem der Ansprüche 1 bis 10, **dadurch gekennzeichnet, dass** das Monomer (B) der allgemeinen Formel III:
CH₂=CYZ III
entspricht, in welcher:
wenn:
- Y ein Wasserstoffatom ist, dann Z eine Gruppe COOR', C₆H₄R", CN, Cl, OC(O)C₁-C₈-Alkyl, CH=CH₂, NH₂ oder NHR' ist;
- Y CH₃ ist, dann Z eine Gruppe COOR', C₆H₄R", CN, CH=CH₂, NH₂ oder NHR' ist;
- Y ein Chloratom ist, dann Z ein Chloratom ist, wobei
- R' eine C₁-C₈-Alkylgruppe oder eine C₁-C₈-Hydroxyalkylgruppe ist und
- R" ein Wasserstoff-, Chlor-, Bromatom oder eine C₁-C₄-Alkylgruppe ist.

12. Assoziatives alkalilösliches Copolymer nach einem der Ansprüche 1 bis 11, **dadurch gekennzeichnet, dass** das Monomer (B) ein Monomer ist, das ausgewählt ist aus: Ethylacrylat, Ethylmethacrylat, 2-Ethylhexylacrylat, Butylacrylat, Butylmethacrylat, 2-Hydroxyethylacrylat, 2-Hydroxybutylmethacrylat, Styrol, Vinyltoluol, ter-Butylstyrol, Hydroxystyrol, Isopropylstyrol, p-Chlorstyrol, Vinylacetat, Vinylbutyrat, Vinylcaprolat, Acrylnitril, Methacrylnitril, Butadien, Isopren, Vinylchlorid, Vinylidenchlorid, (Meth)acrylamiden und deren Analogen.

13. Assoziatives alkalilösliches Copolymer nach einem der Ansprüche 1 bis 12, **dadurch gekennzeichnet, dass** das Monomer (B) ein Monovinylester wie z. B. Ethylacrylat oder eine Mischung desselben mit Styrol, Hydroxyethylacrylat, Acrylnitril, Vinylchlorid oder Vinylacetat ist.

14. Assoziatives alkalilösliches Copolymer nach einem der Ansprüche 2 bis 13, **dadurch gekennzeichnet, dass** das Monomer, welches wenigstens zwei im Hinblick auf eine radikalische Polymerisation reaktive Gruppen (E) trägt, ausgewählt ist aus Glyoxalbisacrylamid und Ethylenglycoldimethacrylat.

15. Assoziatives alkalilösliches Copolymer nach Anspruch 14, **dadurch gekennzeichnet, dass** es 0,01 Gew.-% des genannten Monomers umfasst.

16. Verfahren zur Herstellung eines assoziativen alkalilöslichen Copolymers nach einem der Ansprüche 1 bis 15, **dadurch gekennzeichnet, dass** man die radikalische Polymerisation der Monomere (A), (B), (C), (D) und gegebenenfalls (E) bei einem pH, der kleiner ist als oder in der Größenordnung von 5 liegt, und in Gegenwart wenigstens eines Radikalstarters durchführt.

17. Verfahren nach Anspruch 16, **dadurch gekennzeichnet, dass** das assoziative alkalilösliche Copolymer durch radikalische Polymerisation in einer Emulsion erhalten wird.

18. Verwendung eines Copolymers nach einem der Ansprüche 1 bis 15 oder welches durch das Verfahren nach Anspruch 16 oder 17 erhältlich ist, in der Eigenschaft als Verdickungsmittel für Beschichtungsbäder zur Auftragung auf Celluloseträger.

19. Verwendung eines Copolymers nach einem der Ansprüche 1 bis 15 oder welches durch das Verfahren nach Anspruch 16 oder 17 erhältlich ist, in der Eigenschaft als die Fleckenbildung (mottling) verringerndes Mittel in Beschichtungsbädern zur Auftragung auf Celluloseträger.

20. Verwendung nach Anspruch 18 oder 19, **dadurch gekennzeichnet, dass** das Copolymer in einem Beschichtungsbad für Papieranwendungen im Verhältnis von 0,1 bis 3 Gewichtsteilen pro 100 Gewichtsteilen des Ladeguts eingesetzt wird.

## Claims

1. An associative alkali-soluble copolymer, **characterized in that** said copolymer comprises at least:
(A) 15% to 60% by weight of at least one C₃ to C₈ α, β-ethylenically unsaturated mono- or di-carboxylic monomer;
(B) 15% to 80% by weight of at least one non-ionic and copolymerisable C₂ to C₁₂ α, β-ethylenically unsaturated monomer;
(C) 1% to 20% by weight of at least one non-ionic ethylenically unsaturated biphilic monomer with general formula I: 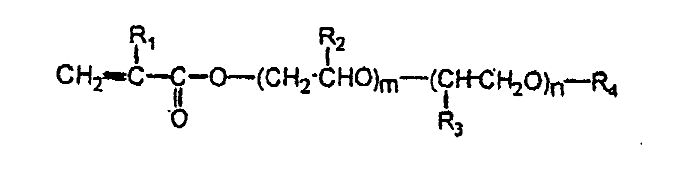 in which:
R₁ is a hydrogen atom or a methyl group;
R₂ and R₃, which may be identical or different, represent a hydrogen atom or a C₁-C₄ alkyl group;
R₄ represents:
• a C₈-C₃₀ alkyl group;
• a phenyl group substituted with one to three 1-phenylethyl groups; or
• a C₈ to C₁₈ phenylalkyl group;
n is equal to or in the range 6 to 100 and m is equal to or in the range 0 to 50 provided that n is greater than or equal to m and their sum is in the range 6 to 100;
(D) 1% to 10% by weight of at least one ethylenically unsaturated monomer carrying at least two neighbouring hydroxyl functions or a precursor group for said functions.

2. An associative alkali-soluble copolymer according to claim 1, **characterized in that** the copolymer further comprises at least one monomer carrying at least two groups that are reactive in radical polymerisation.

3. An associative alkali-soluble copolymer according to claim 1 or claim 2, **characterized in that** the monomer (D) derives from an alkyl acrylate or methacrylate.

4. An associative alkali-soluble copolymer according to claim 1, claim 2 or claim 3, **characterized in that** the precursor group for the hydroxyl functions present in monomer (D) is a cyclic acetal group with five links, a vicinal trialkylsilylether group or an epoxy group.

5. An associative alkali-soluble copolymer according to one of claims 1 to 4, **characterized in that** the monomer (D) is glycidyl methacrylate.

6. An associative alkali-soluble copolymer according to one of claims 1 to 5, **characterized in that** the biphilic monomer (C) has general formula I: 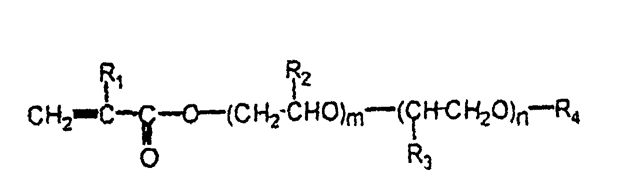 in which R₄ represents a phenyl group substituted by at least one 1-phenylethyl group.

7. An associative alkali-soluble copolymer according to one of claims 1 to 6, **characterized in that** the biphilic monomer is a phenyl poly(alkyleneoxy) acrylate or methacrylate substituted in the phenyl ring by one to three 1-phenylethyl groups.

8. An associative alkali-soluble copolymer according to claim 7, **characterized in that** the poly(alkyleneoxy) group has ethyleneoxy motifs or mixed ethyleneoxy and propyleneoxy motifs, with the number of alkyleneoxy motifs being equal to or in the range 6 to 100.

9. An associative alkali-soluble copolymer according to one of claims 1 to 8, **characterized in that** monomer (A) has general formula II:
RCH=C(R₅)-C(O)OH II
in which, when
(a) R is a hydrogen atom, then R₅ is a hydrogen atom or a C₁-C₄ alkyl group or a CH₂C(O)OX group;
(b) R is -C(O)OX, then R₅ is a hydrogen atom or a CH₂C(O)OX group;
(c) R₅ is a hydrogen atom, then R is a methyl group; and
X is a C₁-C₄ alkyl group or a hydrogen atom.

10. An associative alkali-soluble copolymer according to any one of claims 1 to 9, **characterized in that** monomer (A) is acrylic or methacrylic acid or a mixture thereof, optionally with itaconic acid, fumaric acid, crotonic acid and/or their hemi-esters with C₁-C₄ alkanols or those of unsaturated acid anhydrides such as maleic anhydride.

11. An associative alkali-soluble copolymer according to any one of claims 1 to 10, **characterized in that** monomer (B) has general formula III:
CH₂=CYZ III
in which:
when:
• Y is a hydrogen atom, then Z is a COOR', C₆H₄R", CN, Cl, OC(O) (C₁-C₈) alkyl, CH=CH₂, NH₂ or NHR' group;
• Y is CH₃, then Z is a COOR', C₆H₄R", CN, CH=CH₂, NH₂ or NHR' group;
• Y is a chlorine atom, then Z is a chlorine atom,
in which:
• R' is a C₁-C₈ alkyl group or a C₁-C₈ hydroxyalkyl group; and
• R" is a hydrogen atom, a chlorine or bromine atom, or a C₁-C₄ alkyl group.

12. An associative alkali-soluble copolymer according to one of claims 1 to 11, **characterized in that** monomer (B) is a monomer selected from: ethyl acrylate, ethyl methacrylate, 2-ethylhexyl acrylate, butyl acrylate, butyl methacrylate, 2-hydroxyethyl acrylate, 2-hydroxybutyl methacrylate, styrene, vinyltoluene, ter-butylstyrene, hydroxystyrene, isopropylstyrene, p-chlorostyrene, vinyl acetate, vinyl butyrate, vinyl caprolate, acrylonitrile, methacrylonitrile, butadiene, isoprene, vinyl chloride, vinylidene chloride, (meth)acrylamides and the like.

13. An associative alkali-soluble copolymer according to one of claims 1 to 12, **characterized in that** monomer (B) is a monovinyl ester such as ethyl acrylate or a mixture thereof with styrene, hydroxyethyl acrylate, acrylonitrile, vinyl chloride or vinyl acetate.

14. An associative alkali-soluble copolymer according to one of claims 2 to 13, **characterized in that** the monomer carrying at least two groups that are reactive in radical polymerisation (E) is selected from glyoxalbisacrylamide and ethylene glycol dimethacrylate.

15. An associative alkali-soluble copolymer according to claim 14, **characterized in that** it comprises 0.01% to 1% by weight of said monomer.

16. A process for preparing an associative alkali-soluble copolymer according to one of claims 1 to 15, **characterized in that** radical polymerisation of monomers (A), (B), (C), (D) and optionally (E) is carried out at a pH of about 5 or less, and in the presence of at least one free radical initiator.

17. A process according to claim 16, **characterized in that** the associative alkali-soluble copolymer is obtained by emulsion radical polymerisation.

18. Use of a copolymer according to one of claims 1 to 15 or capable of being obtained by the process of claim 16 or claim 17 as a thickener for coating ponds for coating onto cellulosic supports.

19. Use of a copolymer according to any one of claims 1 to 15 or capable of being obtained by the process according to claim 16 or claim 17 as an agent for reducing mottling in coating ponds for coating onto cellulosic supports.

20. Use according to claim 18 or claim 19, **characterized in that** the copolymer is used in a coating pond for paper industry applications in an amount of 0.1 to 3 parts by weight per 100 parts of charge.
